# FASCICULE DE BREVET EUROPEEN

(11) **EP 3 058 136 B1**
(45) Date de publication et mention de la délivrance du brevet: **17.10.2018**
(21) Numéro de dépôt: 14786192.6
(22) Date de dépôt: 17.10.2014
(51) Int. Cl.: D21H 27/32, B32B 27/10, B32B 29/00, D21H 17/46, D21H 17/56, D21H 21/16, D21H 21/20

(54) **DOCUMENT DE SECURITE, TEL QU'UN BILLET DE BANQUE, ET PROCEDE DE FABRICATION ASSOCIE**
SICHERHEITSDOKUMENT, WIE ETWA BANKNOTEN, UND ZUGEHÖRIGES HERSTELLUNGSVERFAHREN
SECURITY DOCUMENT, SUCH AS A BANK NOTE, AND ASSOCIATED PRODUCTION METHOD

(30) Priorité: 18.10.2013 FR 1360147
(43) Date de publication de la demande: 24.08.2016
(73) Titulaire: Banque De France, 75001 Paris (FR)
(72) Inventeur: GUTKNECHT, Dan, F-63170 Perignat les Sarlieve (FR); BARATS, Michel, F-63800 Cournon (FR)
(74) Mandataire: Regimbeau
(86) Numéro de dépôt international: PCT/EP2014/072363
(87) Numéro de publication internationale: WO 2015/055840

(56) Documents cités:
- US-A1- 2006 127 649
- US-A1- 2006 198 987

## Description

### DOMAINE DE L'INVENTION

L'invention concerne un document de sécurité, tel qu'un billet de banque, et un procédé de fabrication d'un document de sécurité associé.

### ETAT DE LA TECHNIQUE

On connait du document WO 91/12372 une feuille imprimable de type papier fiduciaire traitée par une composition comprenant au moins une charge et au moins un liant élastomère. Parmi les élastomères possibles, on trouve les dispersions aqueuses de polyuréthane. Ces types de traitements agissent essentiellement sur la résistance à la salissure, augmentant de ce fait la durée de vie des documents en circulation, mais ne modifient pas de manière conséquente les caractéristiques mécaniques des documents.

Le document WO 2009/150117 décrit un procédé de traitement de billets de banque destiné à renforcer la résistance des billets de banque à la salissure, consistant à déposer sur la surface à traiter une barrière de protection formée d'un mélange comprenant un polyuréthane aliphatique à base de polycarbonate et un polyuréthane aliphatique à base de polyéther.

On connait également du document WO 98/15418 un document de sécurité, tel qu'un billet de banque, comprenant un substrat formé à partir d'une feuille en matière plastique transparente et une couche opacifiante couvrant partiellement la surface du substrat, telle qu'une couche d'encre par exemple.

Le substrat est réalisé dans un matériau plus commun (donc plus facilement accessible) que le papier fiduciaire et ne permet pas l'incorporation de certains signes de sécurité, tels que des filigranes ou des fils de sécurité.

De plus, l'impression ne migrant pas dans le substrat, l'adhésion des encres est amoindrie, de sorte qu'il peut être difficile d'identifier les billets de banque après une longue période de circulation.

Le document WO 2004/028825 décrit un papier de sécurité formé à partir d'un substrat comprenant une couche de papier prise en sandwich entre deux couches de film, le film présentant au moins un signe de sécurité. De tels billets présentent un risque de séparabilité des films polymères ou du papier lui-même. De tels billets, dont les sécurités graphiques et les impressions se situent essentiellement sur les films contenant un primaire d'impression, présentent également des limites de durabilité liées à la tenue des encres, au même titre que les billets à substrat entièrement constitué de polymère. De ce fait, il est très souvent rendu nécessaire de prévoir de déposer une couche de vernis de protection à la surface de ces deux types de documents, afin de renforcer la tenue des encres sur le document en circulation.

WO 2010/146065 décrit un document de sécurité similaire comprenant en outre une imprégnation de la surface du papier par une composition contenant du polyuréthane. De tels documents présentent également des limites de durabilité liées à la tenue des encres.

De plus, bien que la couche de papier soit protégée de l'humidité sur ses faces par les couches de film, l'eau ou les salissures sont susceptibles de pénétrer par capillarité par les tranches non-protégées de la couche de papier (c'est-à-dire au pourtour du document). Cette pénétration entraine l'apparition d'auréoles sur le pourtour du document et peut entrainer à terme un décollement des couches de film, voire un délaminage de la couche de papier.

### RESUME DE L'INVENTION

Un but de l'invention est de proposer un document de sécurité multicouche, tel qu'un billet de banque, qui soit résistant à l'eau et aux salissures et aux dégradations mécaniques (en particulier le délaminage).

Ce but est atteint dans le cadre de la présente invention grâce à un document de sécurité, tel qu'un billet de banque, comprenant :
- un substrat comprenant une feuille de papier présentant une première face et une deuxième face,
- un premier film en matériau polymère s'étendant sur la première face, et
- un deuxième film en matériau polymère s'étendant sur la deuxième face,
dans lequel la feuille comprend une matrice de fibres et au moins un agent de résistance à l'état humide (REH), l'agent de résistance à l'état humide étant choisi de préférence dans le groupe consistant en une résine polyamidoamine-épichlorohydrine (PAAE), une résine urée-formaldéhyde (UF), une résine formaldéhyde et l'un de leurs dérivés, avec un ratio poids sec d'agent / poids sec de fibres supérieur ou égal à 2,3%.

Grâce au taux élevé d'agent de résistance à l'état humide présent dans le substrat, le papier présente une cohésion interne améliorée, aussi bien en conditions humides qu'en conditions sèches. Cela réduit le risque de délaminage du document au sein même de l'épaisseur du papier.

Dans un mode de réalisation de l'invention, la feuille comprend au moins un agent de collage en masse choisi de préférence dans le groupe consistant en un anhydride alkyle succinique (ASA), un dimère d'alkylcétène (AKD), de la colophane et l'un de leurs dérivés.

L'agent de collage en masse confère aux fibres des propriétés hydrophobes, et ce dans l'ensemble du volume de la feuille de papier. L'agent de collage en masse permet ainsi de limiter la pénétration de l'humidité, de l'eau ou des liquides de salissure à l'intérieur du papier par les tranches du document non-protégées par le film polymère.

De préférence, la feuille comprend au moins un agent de collage en masse, avec un ratio poids sec d'agent / poids sec de fibres compris entre 0,05 et 1%, de préférence entre 0,1 et 0,6%.

Le document de sécurité peut en outre présenter les caractéristiques suivantes :
- le substrat comprend au moins une couche de polymère à base d'acrylique sur au moins l'une des faces de la feuille de papier, la couche de polymère à base d'acrylique étant obtenue par enduction de la face de la feuille de papier par une dispersion acrylique comprenant un ou plusieurs monomère(s) choisi(s) de préférence dans le groupe consistant en l'acide acrylique, les acrylates, l'acrylonitrile, le vinyle ester, l'éthylène, le styrène,
- la feuille de papier comprend un mélange de fibres de plantes annuelles et de fibres synthétiques contenant au plus 20% en poids de fibres synthétique,
- le document comprend au moins une impression à l'encre sur au moins l'une des faces de la feuille de papier, l'impression à l'encre étant recouverte par le premier film ou le deuxième film,
- le document comprend une couche d'adhésif entre le substrat et l'un des films, la couche d'adhésif comprenant de préférence un copolymère éthylène-acétate de vinyle comprenant au moins 23% en poids d'acétate de vinyle,
- le copolymère éthylène-acétate de vinyle comprend entre 26 et 33% en poids d'acétate de vinyle,
- le matériau polymère formant le premier film et le deuxième film comprend du polypropylène bi-orienté (BOPP).

L'invention se rapporte également à un procédé de fabrication d'un document de sécurité, tel qu'un billet de banque, comprenant des étapes de :
- ajouter à une suspension fibreuse un agent de résistance à l'état humide (REH), l'agent de résistance à l'état humide étant choisi de préférence dans le groupe consistant en une résine polyamidoamine-épichlorohydrine (PAE), une résine urée-formaldéhyde (UF), une résine formaldéhyde et l'un de leurs dérivés, avec un ratio poids sec d'agent / poids sec de fibres supérieur ou égal à 2,3%,
- égoutter et sécher la suspension fibreuse pour former une feuille de papier comprenant une matrice de fibres et l'agent de résistance à l'état humide, la feuille de papier présentant une première face et une deuxième face, et
- appliquer un premier film en matériau polymère sur la première face de la feuille de papier, et un deuxième film en matériau polymère sur la deuxième face de la feuille de papier pour former un complexe polymère/papier/polymère.

Le procédé peut comprendre en outre une étape de :
- découper le complexe polymère/papier/polymère pour obtenir plusieurs documents de sécurité.

Le procédé peut comprendre, préalablement à l'étape d'égouttage et de séchage, une étape de :
- ajouter à la suspension fibreuse un agent de collage en masse choisi de préférence dans le groupe consistant en un anhydride alkyle succinique (ASA), un dimère d'alkylcétène (AKD), de la colophane et l'un de leurs dérivés.

De préférence, entre 0,05 et 1% en poids sec, de préférence entre 0,2 et 0,7% en poids sec, d'agent de collage masse est ajouté à la suspension fibreuse.

Selon un mode de réalisation du procédé, le procédé peut comprendre une étape de :
- enduire au moins l'une des faces de la feuille de papier d'une dispersion à base d'acrylique avant l'application des films, la dispersion à base d'acrylique comprenant un ou plusieurs monomère(s) choisi(s) de préférence dans le groupe consistant en l'acide acrylique, les acrylates, l'acrylonitrile, le vinyle ester, l'éthylène, le styrène.

De préférence, le substrat comprend un mélange de fibres de plantes annuelles et de fibres synthétiques contenant au plus 20% en poids de fibres synthétique.

Le procédé peut comprendre une étape de :
- imprimer la feuille de papier sur au moins l'une de ses faces avec au moins une impression à l'encre, l'impression à l'encre étant ensuite recouverte par le premier film ou le deuxième film.

Selon un mode de réalisation, le premier film et le deuxième film présentent chacun une surface préencollée avec une couche d'adhésif, la couche d'adhésif comprenant de préférence un copolymère éthylène-acétate de vinyle comprenant au moins 23% en poids d'acétate de vinyle.

Le copolymère éthylène-acétate de vinyle comprend de préférence entre 26 et 33% en poids d'acétate de vinyle.

Le procédé peut comprendre une étape de :
- laminer à chaud le complexe polymère/papier/polymère, chaque couche d'adhésif s'étendant entre le substrat et l'un des films.

De préférence, le matériau polymère formant le premier film et le deuxième film comprend du polypropylène bi-orienté (BOPP).

### PRESENTATION DES DESSINS

D'autres caractéristiques et avantage ressortiront encore de la description qui suit, laquelle est purement illustrative et non limitative et doit être lue en regard des figures annexées parmi lesquelles :
- la figure 1 est un diagramme représentant de manière schématique des étapes d'un procédé de fabrication de billets de banque, conforme à un mode de réalisation de l'invention,
- les figures 2 à 8 illustrent des étapes du procédé de fabrication,
- la figure 9 représente de manière schématique un billet de banque conforme à un mode de réalisation de l'invention.

### DESCRIPTION DETAILLEE D'UN MODE DE REALISATION

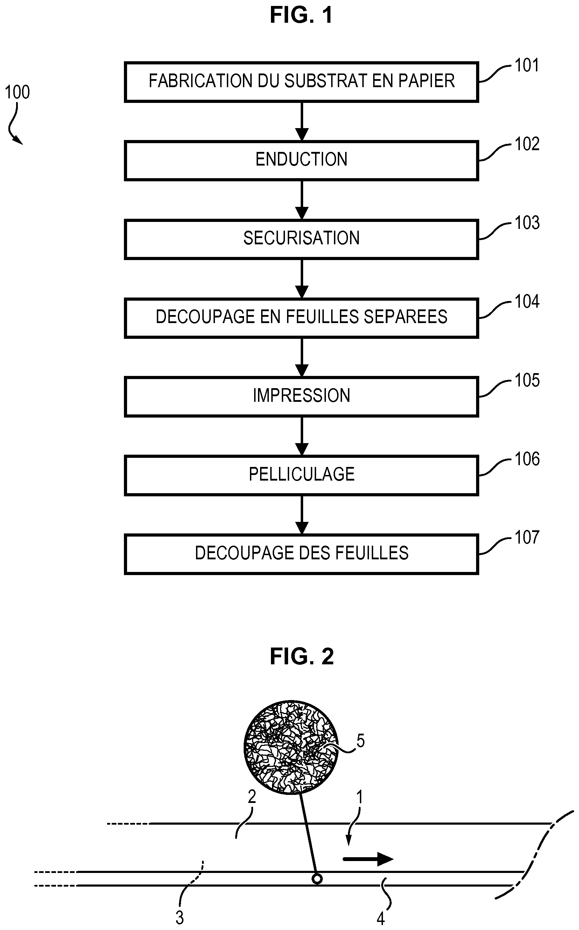

En référence à la figure 1, le procédé 100 de fabrication de billets de banque comprend les étapes suivantes.

Selon une première étape 101 (étape de fabrication du substrat en papier illustrée sur la figure 2), un substrat en papier est fabriqué.

Le substrat en papier se présente initialement sous la forme d'une bande de papier 1 présentant une première face 2, une deuxième face 3, ainsi qu'une tranche 4 s'étendant sur les côtés longitudinaux de la bande de papier 1.

Le substrat en papier 1 est formé par égouttage et séchage d'une suspension fibreuse comprenant :
- une matrice de fibres,
- un agent de résistance à l'état humide (REH), et
- un agent de collage en masse.

La matrice de fibres comprend des fibres végétales 5, par exemple des fibres de bois et/ou des fibres de plantes annuelles, par exemple de coton, ainsi qu'éventuellement des fibres synthétiques.

L'agent de résistance à l'état humide a pour fonction d'augmenter la cohésion interne du papier, aussi bien en conditions humides qu'en conditions sèches. D'une part, l'agent de résistance à l'état humide est adsorbé par les fibres de la suspension fibreuse, de manière à former un réseau réticulé dans le volume de la feuille de papier. Le réseau réticulé limite le gonflement des fibres lorsque le papier est mis en contact avec de l'eau. D'autre part, l'agent de résistance à l'état humide forme des liaisons covalentes avec les fibres, ce qui rend le papier plus résistant aussi bien à l'état sec qu'à l'état humide.

L'agent de résistance à l'état humide est soluble dans l'eau de la suspension fibreuse. Il est choisi de préférence dans le groupe consistant en une résine polyamidoamine-épichlorohydrine (PAAE), une résine urée-formaldéhyde (UF), une résine formaldéhyde et l'un de leurs dérivés.

L'agent de résistance à l'état humide est ajouté dans la suspension fibreuse avec un ratio poids sec d'agent / poids sec de fibres supérieur ou égal à 2,3%.

L'agent de collage en masse confère aux fibres des propriétés hydrophobes, et ce dans l'ensemble du volume de la feuille. L'agent de collage en masse permet ainsi de limiter la pénétration de l'humidité et des liquides à l'intérieur du papier lorsque le substrat est en contact avec de l'eau.

L'agent de collage en masse est choisi de préférence dans le groupe consistant en un anhydride alkyle succinique (ASA), un dimère d'alkylcétène (AKD), de la colophane et l'un de leurs dérivés.

L'agent de collage est ajouté dans la suspension fibreuse avec un ratio poids sec d'agent / poids sec de fibres compris entre 0,05 et 1%, de préférence entre 0,1 et 0,6%.

La présence d'agent de collage en masse a pour conséquence de réduire l'énergie de surface des fibres du papier et par conséquent de diminuer l'adhésion des encres et des films polymères.

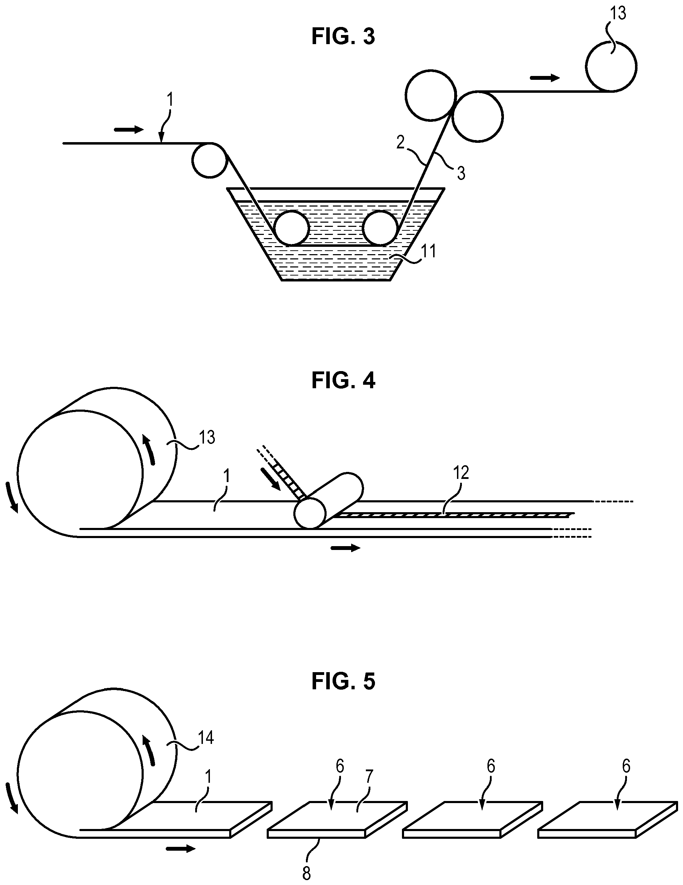

Selon une deuxième étape 102 (étape d'enduction illustrée sur la figure 3), la bande de papier 1 est alors enduite sur chacune de ses faces 2 et 3 d'une couche de polymère acrylique.

Les couches de polymère acrylique sont obtenues par enduction des faces de la bande de papier 1 par une dispersion 11 à base d'acrylique, la dispersion 11 comprenant un ou plusieurs monomère(s) choisi(s) de préférence dans le groupe consistant en l'acide acrylique, les acrylates, l'acrylonitrile, le vinyle ester, l'éthylène, le styrène.

A cet effet, la bande de papier 1 est enduite par trempage en ligne sur une machine à papier, à un grammage compris entre 1 et 10 grammes de dispersion sèche par mètre carré de papier, de préférence entre 1 et 4 grammes par mètre carré, ce grammage étant réparti sur les deux faces de la bande de papier.

Les couches de polymère à base d'acrylique ont pour fonction d'assurer l'imprimabilité de la bande de papier et d'accroître l'adhésion des films polymères qui seront appliqués sur les faces de la feuille de papier lors d'une étape ultérieure de pelliculage.

L'étape 101 d'égouttage et de séchage et l'étape 102 d'enduction peuvent être réalisées en ligne sur une machine à papier. La suspension fibreuse est égouttée, puis séchée dans des fours, puis le substrat obtenu est enduit.

La bande de papier 1 est ensuite enroulée pour former une bobine 13.

Selon une troisième étape 103 (étape de sécurisation illustrée sur la figure 4), la bande continue de papier 1 est déroulée à partir de la bobine 13 et entrainée en défilement. Un signe de sécurité 12 est appliqué sur la bande de papier 1. Le signe de sécurité 12 appliqué peut être par exemple une bande holographique ou une impression iridescente.

La bande de papier 1 est ensuite enroulée à nouveau pour former une bobine 14.

Selon une quatrième étape 104 (étape de découpage en feuilles séparées illustrée sur la figure 5), la bande de papier 1 est déroulée à partir de la bobine 14 et découpée en une pluralité de feuilles de papier séparées 6. Chaque feuille de papier 6 présente une première face 7 et une deuxième face 8, opposée à la première face.

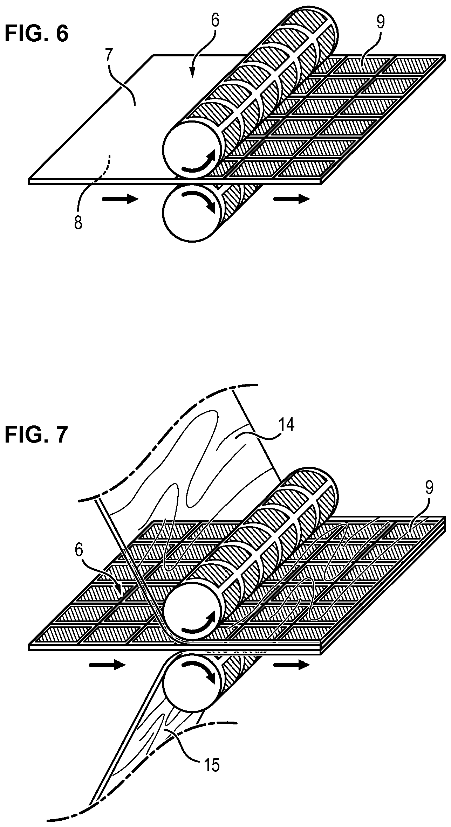

Selon une cinquième étape 105 (étape d'impression illustrée sur la figure 6), la feuille de papier 6 est imprimée avec une impression à l'encre 9 sur la première face 6 et sur la deuxième face 7 selon une technique d'impression feuille à feuille. Plusieurs billets de banque sont imprimés sur une même feuille de papier 6. La technique d'impression feuille à feuille peut être par exemple de type offset, sérigraphie, taille-douce, flexographie, héliographie, typographie.

Selon une sixième étape 106 (étape de pelliculage illustrée sur la figure 7), un premier film 14 en matériau polymère est appliqué sur la première face 7 de la feuille de papier 6 et un deuxième film 15 en matériau polymère est appliqué sur la deuxième face 8 de la feuille de papier 6.

Les films 14 et 15 sont transparents de manière à permettre à un observateur de visualiser l'impression à l'encre 6 à travers les films. Les films 14 et 15 peuvent être brillants ou mats ou comprendre à la fois des zones brillantes et des zones mates.

Le matériau polymère du premier film 14 et du deuxième film 15 peut comprendre un polypropylène bi-orienté (BOPP), un polyéthylène téréphtalate (PET), un polyéthylène (PE), ou un polymère d'acétate de cellulose.

Le premier film 14 et le deuxième film 15 peuvent être appliqués simultanément sur un même groupe de pelliculage, en une seule passe comme illustré sur la figure 7. Alternativement, le premier film 14 et le deuxième film 15 peuvent être appliqués l'un après l'autre en deux passes sur deux groupes distincts de pelliculage.

Selon une première possibilité (pelliculage sec), chaque film 14, 15 présente une surface préencollée avec une couche d'adhésif.

La couche d'adhésif peut comprendre un polymère thermofusible, tel qu'un copolymère éthylène-acétate de vinyle (EVA) ou un polyuréthane (PU).

Lors de l'application des films 14 et 15 sur les faces 7 et 8 de la feuille de papier 6, la feuille de papier 6 recouverte des films en matériau polymère est laminée à chaud pour activer les couches d'adhésif se trouvant entre la feuille de papier et chacun des films afin de coller chaque film à la feuille de papier.

Ainsi, chaque couche d'adhésif est préencollée avant l'étape de pelliculage, et activée lors du pelliculage par l'action conjointe de la température et de la pression. Les bobines de film telles qu'elles sont montées sur le poste de pelliculage présentent une couche externe en matériau polymère et une couche interne d'adhésif. Lors du pelliculage, les films préencollés sont soumis à une température comprise typiquement entre 90 et 150 degrés Celsius et à une pression comprise typiquement entre 2 et 6 bars.

Selon une deuxième possibilité (pelliculage humide), le procédé comprend une étape additionnelle de former une couche d'adhésif à partir d'un adhésif à l'état liquide. Lors de l'application du film sur une face de la feuille de papier, la couche d'adhésif est laminée entre la feuille de papier et le film en matériau polymère.

Cette sixième étape 106 conduit à l'obtention d'une feuille multicouche polymère/papier/polymère 16.

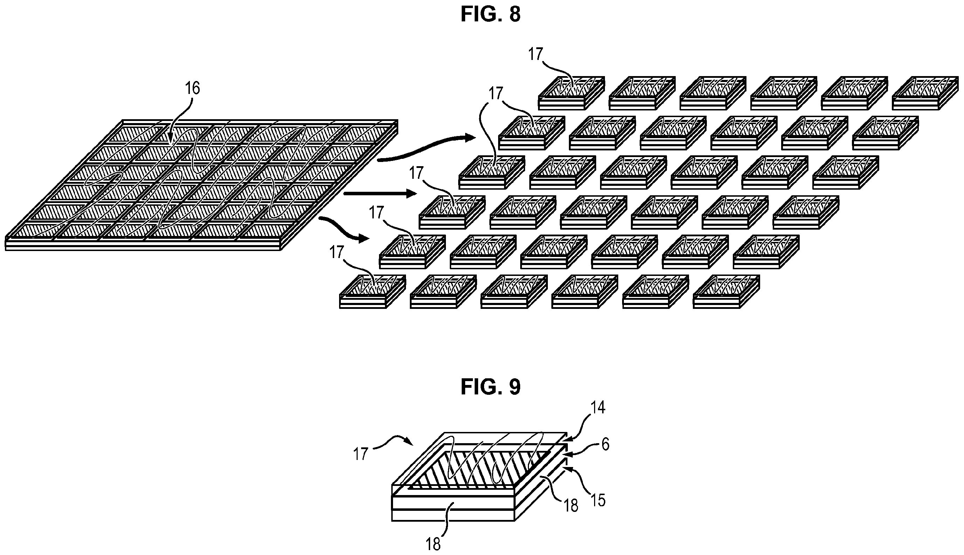

Selon une septième étape 107 (étape de découpage des feuilles illustrée sur la figure 8), chaque feuille multicouche polymère/papier/polymère 16 est découpée pour former plusieurs billets de banque individuels 17.

Comme cela est illustré sur la figure 9, chaque billet de banque 17 obtenu présente une structure multicouche polymère/papier/polymère.

Plus précisément, chaque billet de banque 17 comprend un substrat comprenant une feuille de papier 6, un premier film 14 en matériau polymère et un deuxième film 15 en matériau polymère. Le substrat 6 comprend une matrice de fibres, un agent de résistance à l'état humide et un agent de collage en masse. Le premier film 14 recouvre la première face 7 de la feuille de papier 6. Le deuxième film 15 recouvre une deuxième face 8 de la feuille de papier 6, opposée à la première face. Les tranches 18 de la feuille de papier 6 ne sont pas recouvertes de film.

Ainsi, la feuille de papier 6 est protégée des agressions humides sur chacune de ses faces 7 et 8 par la présence du premier film 14 et du deuxième film 15.

La feuille de papier 6 est également protégée de la pénétration de l'humidité et des liquides par les tranches 18 non-revêtues de film, par la présence de l'agent de collage en masse dans le papier.

Par ailleurs, la présence de l'agent de résistance à l'état humide augmente la cohésion interne du papier et évite un délaminage de la structure multicouche polymère/papier/polymère, par rupture du papier, lors de manipulations extrêmes du billet de banque, aussi bien à l'état humide qu'à l'état sec.

### EXEMPLE

Quatre échantillons présentant une structure multicouche polymère/papier/polymère ont été testés.

Le premier échantillon (échantillon n°1) a été obtenu à partir d'une feuille de sécurité produite sur une machine à papier à forme ronde, à partir d'une suspension aqueuse contenant :
- des fibres de coton,
- un agent de résistance à l'état humide (résine PAAE) avec un ratio poids sec d'agent / poids sec de fibres de 1,8%,
- des charges de dioxyde de titane, concentrées à environ 2 % par rapport à la masse de fibres,
- aucun agent de collage en masse.

La fabrication du premier échantillon comprend :
- après séchage de la feuille, une étape de passage dans un bain d'enduction comprenant une dispersion de polyuréthane (Esacote FB42 fourni par la société Lamberti + réticulant Fissativo 05 fourni par la société Lamberti) concentrée à 10% massique. Cette étape permet de former une imprégnation de 6,5 grammes par mètre carré d'alcool polyvinylique, pour un grammage final de la feuille de 75 gramme / mètre carré;
- une étape d'impression en offset et en taille douce (d'autres techniques d'impression pouvant être employées en complément),
- une étape de pelliculage de la feuille par contre-collage à 110 °C sous une pression de 3 bars d'un premier film en polypropylène bi orientés (BOPP) et d'un deuxième film en BOPP respectivement sur la première face et la deuxième face de la feuille imprimée, les deux films étant appliqués sur un même groupe de pelliculage, et les films en BOPP présentant une couche d'adhésif comprenant un polymère EVA présentant un pourcentage massique d'acétate de vinyle d'environ 28% ;
- une étape de découpage de la feuille en plusieurs billets, chaque billet constituant un premier échantillon.

Le deuxième échantillon (échantillon n°2) est similaire au premier échantillon, excepté les deux différences suivantes :
- la suspension aqueuse comprend, en supplément des constituants de l'échantillon 1, un agent de collage en masse (dimère d'alkylcétène) avec un ratio poids sec d'agent / poids sec de fibres de 0,5%
- en remplacement du polyuréthane, le bain d'enduction comprend une dispersion composée des monomères d'acide acrylique, d'acrylate, d'acrylonitrile, de vinyle ester, d'éthylène, et de styrène. La dispersion est concentrée à 6% massique, entrainant une dépose de 1.8 grammes par mètre carré, pour un grammage final de la feuille de 72 grammes par mètre carré.

Le troisième échantillon (échantillon n°3) est similaire au deuxième échantillon, excepté les deux différences suivantes :
- la suspension aqueuse ne comprend pas d'agent de collage en masse
- la suspension aqueuse comprend un agent de résistance à l'état humide (résine PAAE) avec un ratio poids sec d'agent / poids sec de fibres de 2,7%.

Le quatrième échantillon (échantillon n°4) est similaire au troisième échantillon, excepté la différence suivante :
- la suspension aqueuse comprend, en supplément des constituants de l'échantillon n°1, un agent de collage en masse (dimère d'alkylcétène) avec un ratio poids sec d'agent / poids sec de fibres de 0,5%.

Chaque échantillon a été testé de la manière suivante :
1/ Test de capillarité : trempage de l'échantillon dans de l'eau déminéralisée à 75 degrés Celsius, jusqu'à 180 minutes et observation régulière du front d'absorption sur le pourtour de l'échantillon (éprouvette de largeur 15 millimètres).
2/ Test de dégradation mécanique du papier :
   ∘ plongement 1 minute dans une eau déminéralisée à température ambiante,
   ∘ retrait de l'excès d'eau en surface du document entre des buvards,
   ∘ froissage manuel,
   ∘ dégradation par deux sessions de 1000 tours dans une machine de dégradation de papier présentant une enceinte balayée par une hélice souple tournant à une vitesse d'environ 3000 tours par minute,
   ∘ analyse visuelle des délaminages du document multicouches (éprouvette au format 70 * 140 millimètres).
3/ Test de capillarité après dégradation mécanique du papier :
   ∘ plongement 1 minute dans une eau déminéralisée à température ambiante,
   ∘ retrait de l'excès d'eau en surface du document entre des buvards,
   ∘ froissage manuel,
   ∘ dégradation par deux sessions de 50 tours dans une machine de dégradation de papier présentant une enceinte balayée par une hélice souple tournant à une vitesse d'environ 3000 tours par minute,
   ∘ trempage de l'échantillon dans de l'eau déminéralisée à 75 °C, jusqu'à 35 minutes et observation régulière du front d'absorption sur le pourtour de l'échantillon (éprouvette de largeur 15 mm).

Les résultats des tests sont présentés dans le tableau qui suit :

| Numéro d'échantillon | Test de capillarité | Test de dégradation de papier (délaminage papier) | Test de capillarité après dégradation du papier |
|---|---|---|---|
| 1 | Résistance faible (absorption 7.5 mm au bout de 60 minutes)* | Résistance forte (délaminage papier inférieur à 1 mm) | Résistance faible (absorption 7.5 mm dès 4 minutes) |
| 2 | Résistance forte (pas d'absorption au bout de 180 minutes) | Résistance faible (délaminage papier sur la totalité du billet)** | Résistance moyenne (absorption 5 mm au bout de 30 minutes) |
| 3 | Résistance faible (absorption 7.5 mm au bout de 60 minutes) | Résistance forte (délaminage papier inférieur à 1 mm) | Résistance faible (absorption 7.5 mm dès 1 minute) |
| 4 | Résistance forte (pas d'absorption au bout de 180 minutes) | Résistance forte (délaminage papier inférieur à 1 mm) | Résistance forte (absorption 2.5 mm au bout de 30 minutes) |

| | | | |
|---|---|---|---|
| * Une absorption de 7,5 millimètres correspond à une absorption sur 100% de la largeur de l'échantillon. En effet, sur les deux bords opposés de l'échantillon, le front d'absorption s'étend sur 7,5 millimètres. La totalité de la largeur de l'échantillon (15 millimètres) est donc imprégnée. ** Le délaminage du papier sur la totalité du billet signifie que le billet s'est séparé en deux dans le sens l'épaisseur. | | | |

## Revendications

1. Document de sécurité, tel qu'un billet de banque (17), comprenant :
- un substrat comprenant une feuille de papier (6) présentant une première face (7) et une deuxième face (8),
- un premier film (14) en matériau polymère s'étendant sur la première face (7), et
- un deuxième film (15) en matériau polymère s'étendant sur la deuxième face (8),
dans lequel la feuille de papier (6) comprend une matrice de fibres (5) et au moins un agent de résistance à l'état humide (REH), l'agent de résistance à l'état humide étant choisi de préférence dans le groupe consistant en une résine polyamidoamine-épichlorohydrine (PAE), une résine urée-formaldéhyde (UF), une résine formaldéhyde et l'un de leurs dérivés, avec un ratio poids sec d'agent / poids sec de fibres supérieur ou égal à 2,3%.

2. Document de sécurité selon la revendication 1, dans lequel la feuille de papier (6) comprend au moins un agent de collage en masse choisi de préférence dans le groupe consistant en un anhydride alkyle succinique (ASA), un dimère d'alkylcétène (AKD), de la colophane et l'un de leurs dérivés.

3. Document de sécurité selon l'une des revendications 1 ou 2, dans lequel la feuille de papier (6) comprend au moins un agent de collage en masse, avec un ratio poids sec d'agent / poids sec de fibres compris entre 0,05 et 1%, de préférence entre 0,1 et 0,6%.

4. Document de sécurité selon l'une des revendications 1 à 3, dans lequel le substrat comprend au moins une couche de polymère à base d'acrylique sur au moins l'une des faces (7, 8) de la feuille de papier (6), la couche de polymère acrylique étant obtenue par enduction de la face de la feuille de papier (6) par une dispersion acrylique comprenant un ou plusieurs monomère(s) choisi(s) de préférence dans le groupe consistant en l'acide acrylique, les acrylates, l'acrylonitrile, le vinyle ester, l'éthylène, le styrène.

5. Document de sécurité selon l'une des revendications 1 à 4, dans lequel la feuille de papier (6) comprend un mélange de fibres de plantes annuelles et de fibres synthétiques contenant au plus 20% en poids de fibres synthétique.

6. Document de sécurité selon l'une des revendications 1 à 5, comprenant au moins une impression à l'encre (9) sur au moins l'une des faces (7, 8) de la feuille de papier (6), l'impression à l'encre (9) étant recouverte par le premier film (14) ou le deuxième film (15).

7. Document de sécurité selon l'une des revendications 1 à 6, comprenant une couche d'adhésif entre le substrat et l'un des films (14, 15), la couche d'adhésif comprenant de préférence un copolymère éthylène-acétate de vinyle comprenant au moins 23% en poids d'acétate de vinyle.

8. Document de sécurité selon la revendication 7, dans lequel le copolymère éthylène-acétate de vinyle comprend entre 26 et 33% en poids d'acétate de vinyle.

9. Document de sécurité selon l'une des revendications 1 à 8, dans lequel le matériau polymère formant le premier film (14) et le deuxième film (15) comprend du polypropylène bi-orienté (BOPP).

10. Procédé de fabrication d'un document de sécurité, tel qu'un billet de banque (17), comprenant des étapes de :
- ajouter à une suspension fibreuse un agent de résistance à l'état humide (REH), l'agent de résistance à l'état humide étant choisi de préférence dans le groupe consistant en une résine polyamidoamine-épichlorohydrine (PAE), une résine urée-formaldéhyde (UF), une résine formaldéhyde et l'un de leurs dérivés, avec un ratio poids sec d'agent / poids sec de fibres supérieur ou égal à 2,3%,
- égoutter et sécher la suspension fibreuse pour former une feuille de papier (6) comprenant une matrice de fibres et l'agent de résistance à l'état humide, la feuille de papier (6) présentant une première face (7) et une deuxième face (8), et
- appliquer un premier film (14) en matériau polymère sur la première face (7) de la feuille de papier (6), et un deuxième film (15) en matériau polymère sur la deuxième face (8) de la feuille de papier (6) pour former un complexe polymère/papier/polymère (16).

11. Procédé selon la revendication 10, comprenant une étape de :
- découper le complexe polymère/papier/polymère (16) pour obtenir plusieurs documents de sécurité (17).

12. Procédé selon l'une des revendications 10 et 11, comprenant, préalablement à l'étape d'égouttage et de séchage, une étape de :
- ajouter à la suspension fibreuse un agent de collage en masse choisi de préférence dans le groupe consistant en un anhydride alkyle succinique (ASA), un dimère d'alkylcétène (AKD), de la colophane et l'un de leurs dérivés.

13. Procédé selon la revendication 12, dans lequel entre 0,05 et 1% en poids sec, de préférence entre 0,2 et 0,7% en poids sec, d'agent de collage masse est ajouté à la suspension fibreuse.

14. Procédé selon l'une des revendications 10 à 13, comprenant une étape de :
- enduire au moins l'une des faces (7, 8) de la feuille de papier (6) d'une dispersion acrylique avant l'application des films (14, 15), la dispersion acrylique comprenant un monomère choisi de préférence dans le groupe consistant en l'acide acrylique, les acrylates, l'acrylonitrile, le vinyle ester, l'éthylène, le styrène.

15. Procédé selon l'une des revendications 10 à 14, dans lequel la feuille de papier (6) comprend un mélange de fibres de plantes annuelles et de fibres synthétiques contenant au plus 20% en poids de fibres synthétique.

16. Procédé selon l'une des revendications 10 à 15, comprenant une étape de :
- imprimer la feuille de papier (6) sur au moins l'une de ses faces (14, 15) avec au moins une impression à l'encre (9), l'impression à l'encre (9) étant ensuite recouverte par le premier film (14) ou le deuxième film (15).

17. Procédé selon l'une des revendications 10 à 16, dans lequel le premier film (14) et le deuxième film (15) présentent chacun une surface préencollée avec une couche d'adhésif, la couche d'adhésif comprenant de préférence un copolymère éthylène-acétate de vinyle comprenant au moins 23% en poids d'acétate de vinyle.

18. Procédé selon la revendication 17, dans lequel le copolymère éthylène-acétate de vinyle comprend entre 26 et 33% en poids d'acétate de vinyle.

19. Procédé selon l'une des revendications 17 et 18, comprenant une étape de :
- laminer à chaud le complexe polymère/papier/polymère (16), chaque couche d'adhésif s'étendant entre la feuille de papier (6) et l'un des films (14, 15).

20. Procédé selon l'une des revendications 10 à 19, dans lequel le matériau polymère formant le premier film (14) et le deuxième film (15) comprend du polypropylène bi-orienté (BOPP).

## Patentansprüche

1. Sicherheitsdokument, wie etwa eine Banknote (17), umfassend:
- ein Substrat, das ein Blatt Papier (6) umfasst, welches eine erste Seite (7) und eine zweite Seite (8) aufweist,
- einen ersten Film (14) aus Polymermaterial, der sich auf der ersten Seite (7) erstreckt, und
- einen zweiten Film (15) aus Polymermaterial, der sich auf der zweiten Seite (8) erstreckt,
wobei das Blatt Papier (6) eine Fasermatrix (5) und mindestens ein Nassfestmittel (NFM) umfasst, wobei das Nassfestmittel vorzugsweise ausgewählt ist aus der Gruppe bestehend aus einem Polyamidoamin-Epichlorhydrin-Harz (PAE), einem Harnstoff-Formaldehyd-Harz (UF), einem Formaldehyd-Harz und einem ihrer Derivate, mit einem Verhältnis Trockengewicht Mittel / Trockengewicht Fasern von größer als oder gleich 2,3 %.

2. Sicherheitsdokument nach Anspruch 1, wobei das Blatt Papier (6) mindestens ein Masseleimungsmittel umfasst, vorzugsweise ausgewählt aus der Gruppe bestehend aus einem Alkylbernsteinsäureanhydrid (ASA), einem Alkylketendimer (AKD), Kolophonium und einem ihrer Derivate.

3. Sicherheitsdokument nach einem der Ansprüche 1 oder 2, wobei das Blatt Papier (6) mindestens ein Masseleimungsmittel umfasst, mit einem Verhältnis Trockengewicht Mittel / Trockengewicht Fasern im Bereich zwischen 0,05 und 1 %, vorzugsweise zwischen 0,1 und 0,6 %.

4. Sicherheitsdokument nach einem der Ansprüche 1 bis 3, wobei das Substrat auf mindestens einer der Seiten (7, 8) des Blatts Papier (6) mindestens eine Polymerschicht auf Acrylbasis umfasst, wobei die Acrylpolymerschicht durch Beschichten der Seite des Blatts Papier (6) mit einer Acryldispersion erhalten wird, die ein oder mehrere Monomer(e) umfasst, vorzugsweise ausgewählt aus der Gruppe bestehend aus Acrylsäure, Acrylaten, Acrylnitril, Vinylester, Ethylen, Styrol.

5. Sicherheitsdokument nach einem der Ansprüche 1 bis 4, wobei das Blatt Papier (6) eine Mischung aus Fasern einjähriger Pflanzen und aus synthetischen Fasern umfasst, die höchsten 20 Gewichts-% synthetische Fasern enthält.

6. Sicherheitsdokument nach einem der Ansprüche 1 bis 5, das auf mindestens einer der Seiten (7, 8) des Blatts Papier (6) mindestens eine Bedruckung mit Tinte (9) umfasst, wobei die Bedruckung mit Tinte (9) von dem ersten Film (14) oder dem zweiten Film (15) überzogen ist.

7. Sicherheitsdokument nach einem der Ansprüche 1 bis 6, das eine Klebstoffschicht zwischen dem Substrat und einem der Filme (14, 15) umfasst, wobei die Klebstoffschicht vorzugsweise ein Ethylen-Vinylacetat-Copolymer umfasst, das mindestens 23 Gewichts-% Vinylacetat umfasst.

8. Sicherheitsdokument nach Anspruch 7, wobei das Ethylen-Vinylacetat-Copolymer zwischen 26 und 33 Gewichts-% Vinylacetat umfasst.

9. Sicherheitsdokument nach einem der Ansprüche 1 bis 8, wobei das Polymermaterial, das den ersten Film (14) und den zweiten Film (15) bildet, biaxial orientiertes Polypropylen (BOPP) umfasst.

10. Verfahren zur Herstellung eines Sicherheitsdokuments, wie etwa einer Banknote (17), umfassend Schritte des:
- Zugebens, zu einer Fasersuspension, eines Nassfestmittels (NFM), wobei das Nassfestmittel vorzugsweise ausgewählt ist aus der Gruppe bestehend aus einem Polyamidoamin-Epichlorhydrin-Harz (PAE), einem Harnstoff-Formaldehyd-Harz (UF), einem Formaldehyd-Harz und einem ihrer Derivate, mit einem Verhältnis Trockengewicht Mittel / Trockengewicht Fasern von größer als oder gleich 2,3 %,
- Abtropfens und Trocknens der Fasersuspension, um ein Blatt Papier (6) zu bilden, das eine Fasermatrix und das Nassfestmittel umfasst, wobei das Blatt Papier (6) eine erste Seite (7) und eine zweite Seite (8) aufweist, und
- Aufbringens eines ersten Films (14) aus Polymermaterial auf der ersten Seite (7) des Blatts Papier (6), und eines zweiten Films (15) aus Polymermaterial auf der zweiten Seite (8) des Blatts Papier (6), um einen Polymer-/Papier-/Polymer-Komplex (16) zu bilden.

11. Verfahren nach Anspruch 10, umfassend einen Schritt des:
- Zuschneidens des Polymer-/Papier-/Polymer-Komplexes (16), um mehrere Sicherheitsdokumente (17) zu erhalten.

12. Verfahren nach einem der Ansprüche 10 und 11, umfassend, vor dem Schritt des Abtropfens und des Trocknens, einen Schritt des:
- Zugebens, zu der Fasersuspension, eines Masseleimungsmittels, vorzugsweise ausgewählt aus der Gruppe bestehend aus einem Alkylbernsteinsäureanhydrid (ASA), einem Alkylketendimer (AKD), Kolophonium und einem ihrer Derivate.

13. Verfahren nach Anspruch 12, wobei zwischen 0,05 und 1 % Trockengewicht, vorzugsweise zwischen 0,2 und 0,7 % Trockengewicht Masseleimungsmittel zur Fasersuspension zugegeben werden.

14. Verfahren nach einem der Ansprüche 10 bis 13, umfassend einen Schritt des:
- Beschichtens, vor dem Aufbringen der Filme (14, 15), von mindestens einer der Seiten (7, 8) des Blatts Papier (6) mit einer Acryldispersion, wobei die Acryldispersion ein Monomer umfasst, vorzugsweise ausgewählt aus der Gruppe bestehend aus Acrylsäure, Acrylaten, Acrylnitril, Vinylester, Ethylen, Styrol.

15. Verfahren nach einem der Ansprüche 10 bis 14, wobei das Blatt Papier (6) eine Mischung aus Fasern einjähriger Pflanzen und aus synthetischen Fasern umfasst, die höchsten 20 Gewichts-% synthetische Fasern enthält.

16. Verfahren nach einem der Ansprüche 10 bis 15, umfassend einen Schritt des:
- Bedruckens des Blatts Papier (6) auf mindestens einer seiner Seiten (14, 15) mit mindestens einer Bedruckung mit Tinte (9), wobei die Bedruckung mit Tinte (9) anschließend mit dem ersten Film (14) oder dem zweiten Film (15) überzogen wird.

17. Verfahren nach einem der Ansprüche 10 bis 16, wobei der erste Film (14) und der zweite Film (15) jeder eine Fläche aufweisen, die mit einer Klebstoffschicht vorgeleimt ist, wobei die Klebstoffschicht vorzugsweise ein Ethylen-Vinylacetat-Copolymer umfasst, das mindestens 23 Gewichts-% Vinylacetat umfasst.

18. Verfahren nach Anspruch 17, wobei das Ethylen-Vinylacetat-Copolymer zwischen 26 und 33 Gewichts-% Vinylacetat umfasst.

19. Verfahren nach einem der Ansprüche 17 und 18, umfassend einen Schritt des:
- Heißlaminierens des Polymer-/Papier-/Polymer-Komplexes (16), wobei sich jede Klebstoffschicht zwischen dem Blatt Papier (6) und einem der Filme (14, 15) erstreckt.

20. Verfahren nach einem der Ansprüche 10 bis 19, wobei das Polymermaterial, das den ersten Film (14) und den zweiten Film (15) bildet, biaxial orientiertes Polypropylen (BOPP) umfasst.

## Claims

1. A security document, such as a banknote (17), comprising:
- a substrate comprising a sheet of paper (6) having a first face (7) and a second face (8),
- a first film (14) in polymeric material extending over the first face (7), and
- a second film (15) in polymeric material extending over the second face (8),
wherein the paper sheet (6) comprises a matrix of fibres (5) and at least one wet strength agent (WSA), the wet strength agent being preferably selected from the group consisting of polyamidoamine-epichlorohydrin (PAE) resin, a urea-formaldehyde (UF) resin, a formaldehyde resin and one of their derivatives, with an agent dry weight / fibre dry weight ratio greater than or equal to 2.3%.

2. The security document according to claim 1, wherein the paper sheet (6) comprises at least one bulk adhesive bonding agent preferably selected from the group consisting of alkyl succinic anhydride (ASA), alkyl ketene dimer (AKD), rosin and one of their derivatives.

3. The security document according to one of claims 1 or 2, wherein the paper sheet (6) comprises at least one bulk adhesive bonding agent, with an agent dry weight / fibre dry weight ratio of between 0.05 and 1%, preferably between 0.1 and 0.6%.

4. The security document according to one of claims 1 to 3, wherein the substrate comprises at least one polymeric layer based on acrylic on at least one of the faces (7, 8) of the paper sheet (6), the acrylic polymeric layer being obtained by coating the face of the paper sheet (6) with an acrylic dispersion comprising one or more monomers preferably selected from the group consisting of acrylic acid, acrylates, acrylonitrile, vinyl ester, ethylene, styrene.

5. The security document according to one of claims 1 to 4, wherein the paper sheet (6) comprises a mixture of annual plant fibres and of synthetic fibres containing at most 20% by weight synthetic fibres.

6. The security document according to one of claims 1 to 5, comprising at least one ink print (9) on at least one of the faces (7, 8) of the paper sheet (6), the ink print (9) being covered with the first film (14) or the second film (15).

7. The security document according to one of claims 1 to 6, comprising an adhesive layer between the substrate and one of the films (14, 15), the adhesive layer preferably comprising an ethylene-vinyl acetate copolymer comprising at least 23% by weight vinyl acetate.

8. The security document according to claim 7, wherein the ethylene-vinyl acetate copolymer comprises between 26 and 33% by weight of vinyl acetate.

9. The security document according to one of claims 1 to 8, wherein the polymeric material forming the first film (14) and the second film (15) comprises biaxially oriented polypropylene (BOPP).

10. A method for manufacturing a security document, such as a banknote (17), comprising:
- adding to a suspension of fibres a wet strength agent (WSA), the wet strength agent being preferably selected from the group consisting of a polyamidoamine-epichlorohydrin (PAE) resin, a urea-formaldehyde (UF) resin, a formaldehyde resin and one of their derivatives, with an agent dry weight / fibre dry weight ratio greater than or equal to 2.3%,
- draining and drying the suspension of fibres so as to form a paper sheet (6) comprising a matrix of fibres and the wet strength agent, the paper sheet (6) having a first face (7) and a second face (8), and
- applying a first film (14) in polymeric material on the first face (7) of the sheet of paper (6), and a second film (15) in polymeric material on the second face (8) of the sheet of paper (6) so as to form a polymer/paper/polymer complex (16).

11. The method according to claim 10, comprising:
- cutting out the polymer/paper/polymer complex (16) in order to obtain a plurality of security documents (17).

12. The method according to one of claims 10 and 11, comprising, prior to the draining and drying step:
- adding to the suspension of fibres, a bulk adhesive bonding agent preferably selected from the group consisting in an alkyl succinic anhydride (ASA), an alkyl ketene dimer (AKD), rosin and one of their derivatives.

13. The method according to claim 12, wherein between 0.05 and 1% by dry weight, preferably between 0.2 and 0.7% by dry weight of bulk adhesive bonding agent is added to the suspension of fibres.

14. The method according to one of claims 10 to 13, comprising:
- coating at least one of the faces (7, 8) of the paper sheet (6) with an acrylic dispersion before applying the films (14, 15), the acrylic dispersion comprising a monomer preferably selected from the group consisting of acrylic acid, acrylates, acrylonitrile, vinyl ester, ethylene, styrene.

15. The method according to one of claims 10 to 14, wherein the paper sheet (6) comprises a mixture of annual plant fibres and of synthetic fibres containing at most 20% synthetic fibres.

16. The method according to one of claims 10 to 15, comprising:
- printing the sheet of paper (6) on at least one of its faces (14, 15) with at least one ink print (9), the ink print (9) being then covered with the first film (14) or the second film (15).

17. The method according to one of claims 10 to 16, wherein the first film (14) and the second film (15) each have a pre-sized surface with an adhesive layer, the adhesive layer preferably comprising an ethylene-vinyl acetate copolymer comprising at least 23% by weight vinyl acetate.

18. The method according to claim 17, wherein the ethylene-vinyl acetate copolymer comprises between 26 and 33% by weight vinyl acetate.

19. The method according to one of claims 17 and 18, comprising:
- hot rolling the polymer/paper/polymer complex (16), each adhesive layer extending between the paper sheet (6) and one of the films (14, 15).

20. The method according to one of claims 10 to 19, wherein the polymeric material forming the first film (14) and the second film (15) comprises biaxially oriented polypropylene (BOPP).
